# EUROPÄISCHE PATENTSCHRIFT

(11) **EP 0 699 500 B1**
(45) Veröffentlichungstag und Bekanntmachung des Hinweises auf die Patenterteilung: **23.06.1999**
(21) Anmeldenummer: 95113416.2
(22) Anmeldetag: 26.08.1995
(51) Int. Cl.: B23K 11/30, B23B 51/10

(54) **Vorrichtung zum mechanischen Entfernen von Ablagerungen an Schweisselektroden**
Apparatus for the mechanical removal of deposits on welding electrodes
Appareil pour l'enlèvement mécanique des dépôts des électrodes de soudure

(30) Priorität: 01.09.1994 DE 9414151 U
(43) Veröffentlichungstag der Anmeldung: 06.03.1996
(73) Patentinhaber: Koch, Walter, 44287 Dortmund (DE)
(72) Erfinder: Koch, Walter, 44287 Dortmund (DE)
(74) Vertreter: Patentanwälte Wenzel & Kalkoff

(56) Entgegenhaltungen:
- EP-A- 0 171 113
- EP-A- 0 581 308
- DE-A- 3 740 230
- GB-A- 546 792
- PATENT ABSTRACTS OF JAPAN vol. 11 no. 281 (M-624) [2728] ,11.September 1987 & JP-A-62 081279 (DENGENSHA MFG CO LTD) 14.April 1987,

## Beschreibung

Die Erfindung betrifft eine Vorrichtung zum mechanischen Entfernen von Ablagerungen an Schweißelektroden mit einer Aufnahme für ein Abtragwerkzeug zum Abtragen der Ablagerungen an der Schweißelektrode und einem einen Läufer aufweisenden pneumatischen Antrieb mit Getriebe zum drehenden Antrieb der Aufnahme.

Schweißelektroden, insbesondere für Industrieroboter, müssen nach einer bestimmten Anzahl von Schweißvorgängen aufgrund von Ablagerungen (Schweißgrieß) ausgewechselt werden.

Die Schweißelektroden weisen Elektrodenkappen aus Kupfer auf, die auf Trägerkörper aufgesetzt sind. Bei Abnutzung werden diese mittels eines Spezialwerkzeugs von der eigentlichen Schweißelektrode abgenommen und durch neue ersetzt.

Bisher ist eine Vorrichtung bekannt, die den bei dem Schweißvorgang entstehenden Schweißgrieß mittels einer rotierenden Abschälvorrichtung abträgt. Die Vorrichtung selbst besteht aus einer Aufnahmevorrichtung und einem an die Aufnahmevorrichtung angeflanschten Pneumatikmotor, der eine in der Aufnahmevorrichtung angeordnete Abschälvorrichtung antreibt. Diese besteht aus einer Scheibe, die mit Schneidwerkzeugen bestückt ist. Dabei ist die Aufnahmevorrichtung von dem Motor mittels federnder Distanzelementen entkoppelt. Die Aufnahmeeinheit und der Motor sind mit einer Trageinheit fest verbunden, die wiederum federnd wechselseitig in einem U-förmigen Profil gelagert ist.

Zum Reinigen der Schweißelektroden bzw. der Elektrodenkappen fährt der Industrieroboter mit den Enden der Schweißelektroden in die rotierende Abschälvorrichtung der Aufnahmevorrichtung, wobei ungenaue Positionierungen des Roboterarms durch die federnde Lagerung der gesamten Vorrichtung ausgeglichen werden.

Die Vorrichtung jedoch ist in ihren Fertigungskosten zu teuer und für besonders harte Elektroden in ihrer Leistung nicht ausreichend.

Ferner ist aus der **JP-A-628 1279** ein Vorrichtung zum mechanischen Entfernen von Ablagerungen an Schweißelektroden bekannt, wobei diese Vorrichtung aus einer Bearbeitungseinheit zum Abtragen der Ablagerungen an der Schweißelektrode mit mindestens einer Abtragvorrichtung, aus einer pneumatischen Antriebseinheit für den drehenden Antrieb der Abtragvorrichtung sowie aus einer Getriebeeinheit besteht. Die Getriebeeinheit ist zur Herstellung einer kinematischen Verbindung zwischen der Antriebseinheit und der Bearbeitungseinheit vorgesehen.

Bei der bekannten Vorrichtung ist als Bearbeitungseinheit ein konvex ausgestaltetes, den jeweiligen Elektroden angepaßtes Schneidwerkzeug vorgesehen, das in einem Tragarm drehbar angeordnet ist. Ferner ist als Antrieb ein handelsüblicher, pneumatischer Motor vorgesehen, dessen Drehmoment über ein Antriebsritzel und weitere Getrieberäder auf das Schneidwerkzeug übertragen werden.

In der Druckschrift **EP-A-0 171 113** ist ein Gerät zur Bearbeitung von Elektroden einer Punktschweißvorrichtung beschrieben. Dieses Gerät umfaßt eine Schneideeinrichtung, die drehbar in einem Gehäuse gelagert ist, wobei die Schneidelemente der Schneideinrichtung mit einem Motor über ein Getriebe gekoppelt sind.

Diese Vorrichtung besteht im wesentlichen aus drei Baueinheiten, nämlich einer Bearbeitungseinheit mit einer Abtragvorrichtung, einer Getriebeeinheit und einer mit der Abtragvorrichtung gekoppelten Antriebseinheit, wobei letztere aus einem Elektromotor besteht. Zusätzlich ist an der Vorrichtung eine Haltevorrichtung vorgesehen, die es erlaubt, diese Vorrichtung an einem Rohr zu befestigen.

In der Druckschrift **EP-A-0 581 308** ist eine Vorrichtung zum Oberflächenbearbeiten einer Elektrode beschrieben.

Auch hier besteht die Vorrichtung im wesentlichen aus drei Baueinheiten, nämlich einer Aufnahmevorrichtung zum Bearbeiten der Elektroden und einer Antriebseinheit, die aus einem mit Luft betriebenen Motor besteht, der über ein Getriebe mit der Aufnahmeeinrichtung in Verbindung steht.

Aufgabe der Erfindung ist daher, eine Vorrichtung zum mechanischen Entfernen von Ablagerungen an Schweißelektroden so weiterzuentwickeln, daß die Fertigungskosten zur Herstellung der Vorrichtung günstig sind und zum Abtragen von Grieß an den Schweißelektroden besonders für harte Elektroden die Leistung des Antriebes ausreicht.

Zur Lösung dieser Aufgabe wird mit der Erfindung eine Vorrichtung mit den Merkmalen des Anspruchs 1 vorgeschlagen.

Die erfindungsgemäße Vorrichtung ist aufgrund ihres konstruktiven Aufbaus universell und in jeder Lage einbaubar. Sie zeichnet sich besonders durch den einfachen Aufbau des Pneumatikmotors aus, der ein integraler Bestandteil der erfindungsgemäßen Vorrichtung ist und insbesondere ein Drehmoment von mindestens 48 Nm aufweist. Der Läufer des Pneumatikmotors ist drehbar in dem Bearbeitungskopf, der auch das Getriebe und die Aufnahme für das Abtragwerkzeug aufweist, untergebracht.

Weitere vorteilhafte Ausgestaltungen der Erfindung gehen aus den Unteransprüchen und der nachfolgenden Beschreibung hervor.

Die Erfindung wird an Ausführungsbeispielen anhand von Zeichnungen erläutert. Es zeigen:

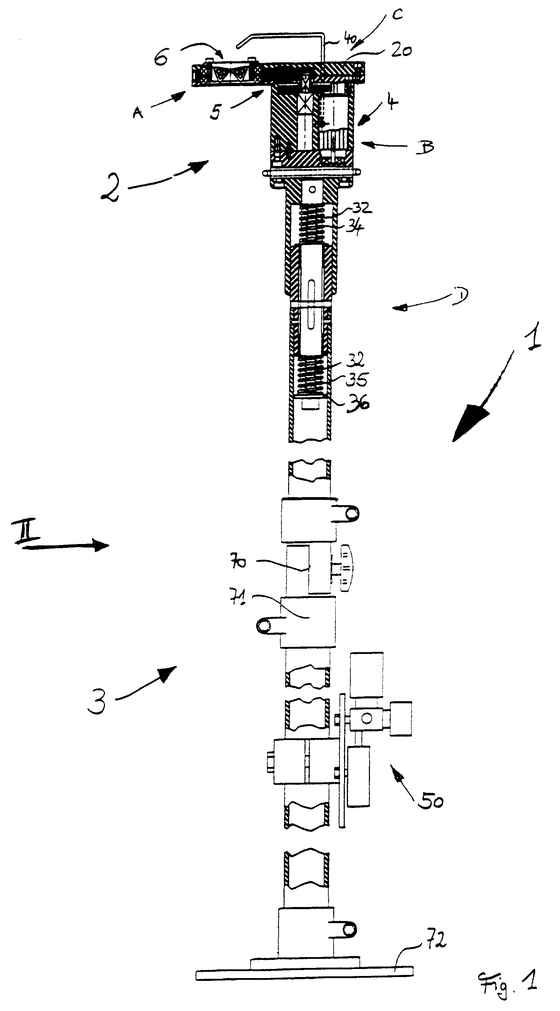

- Fig. 1: eine Seitenansicht auf ein erstes Ausführungsbeispiel der Vorrichtung mit einem an einem Ständer angeordneten Bearbeitungskopf, teilweise im Schnitt,

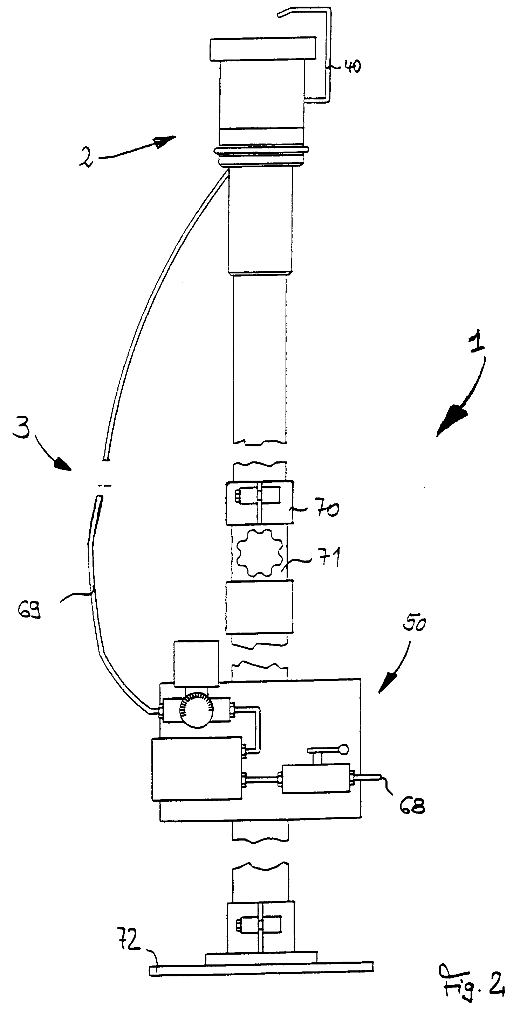

- Fig.2: eine Frontansicht auf die Vorrichtung, in Richtung eines Pfeils II gemäß Fig. 1,

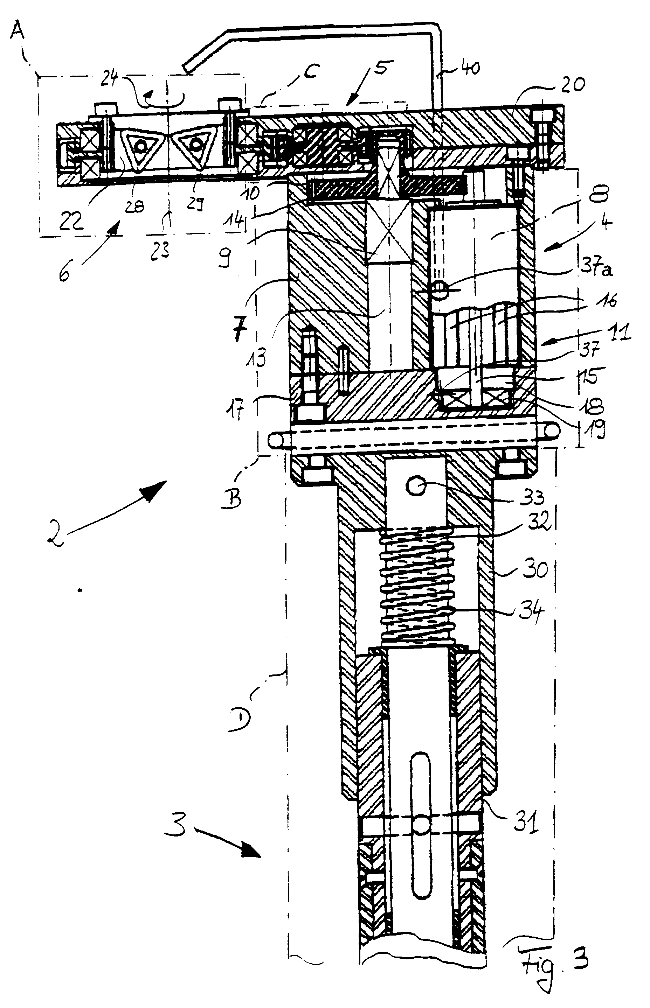

- Fig. 3: eine Seitenansicht des Bearbeitungskopfes der Vorrichtung im Schnitt, jedoch gegenüber Fig. 1 in vergrößertem Maßstab,

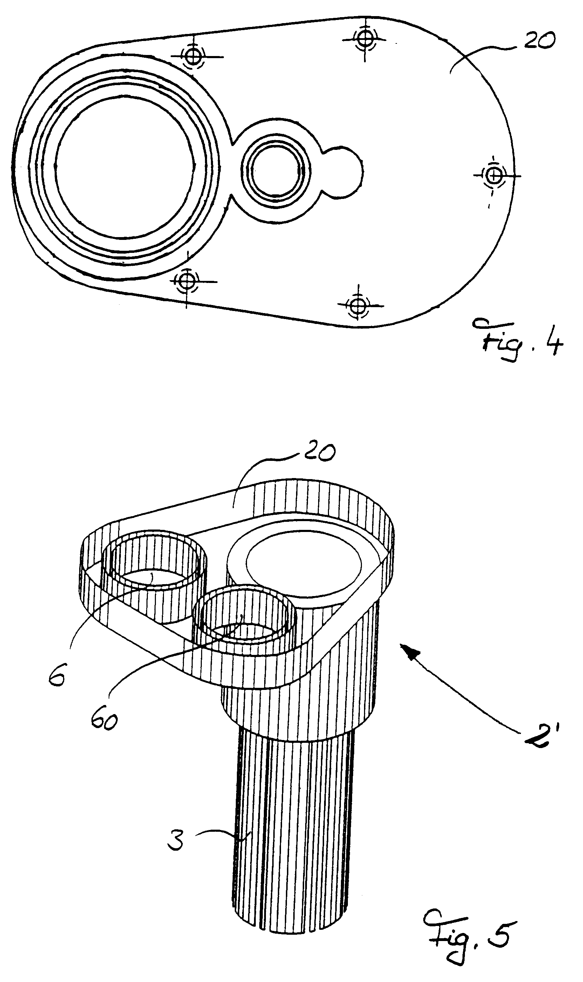

- Fig. 4: eine Draufsicht auf die Vorrichtung gemäß Fig. 1,
- Fig. 5: eine schematische perspektivische Ansicht eines weiteren Ausführungsbeispiels des Barbeitungskopfes der Vorrichtung.

Die Vorrichtung 1 gliedert sich im wesentlichen in zwei Baugruppen, nämlich in einen Bearbeitungskopf 2, 2' und in eine Haltevorrichtung in Form eines Ständers 3, wobei der Bearbeitungskopf 2, 2' aus einer Bearbeitungseinheit (A), einer Antriebseinheit (B) sowie einer Getriebeeinheit (C) besteht und auf eine Montageeinheit (D) aufgesetzt ist.

Der Bearbeitungskopf 2, 2' umfaßt somit u.a. die an sich bekannten Antriebselemente, nämlich einen Pneumatikmotor 4 und ein mit dem Pneumatikmotor 4 gekoppeltes Getriebe 5 und bei einem ersten Ausführungsbeispiel eine mit dem Getriebe 5 in Verbindung stehende Abtragvorrichtung 6.

Bei einem weiteren Ausführungsbeispiel des Bearbeitungskopfes 2' stehen zwei Abtragvorrichtungen 6, 60 mit dem Getriebe 5 in Verbindung.

Der Bearbeitungskopf 2, 2' ist aus einem Vollkörper 7 gefertigt, der in seinem Inneren einen Hohlraum 8, eine durchgängigge Bohrung 9 und eine Aussparung 10 aufweist. Dabei dient der Hohlraum 8 zur Aufnahme eines Läufers 11 des Pneumatikmotors 4, die Bohrung 9, deren axiale Erstreckung zur axialen Erstreckung des Vollkörpers 7 parallel ausgerichtet ist, zur Lagerung einer Welle 13 und die Aussparung 10, die an der Stirnseite des Vollkörpers 7 vorgesehen ist, zur Kapselung eines Antriebsritzels 14.

Der Hohlraum 8 zur Aufnahme des Läufers 11 ist so gestaltet, daß zur Bildung des Pneumatikmotors 4 nur der Läufer 11 mit seiner Welle 15 und an der Welle 15 befestigten Flügelrädern 16 in den Hohlraum 8 eingeschoben werden muß. Das eine Ende des Läufers 11 steht mit dem Antriebsritzel 14, das auf der Welle 13 sitzt und in der Aussparung 10 angeordnet ist, im Eingriff.

Der Vollkörper 7 ist an seinem einen, der Aussparung 10 abgewandten Ende mit einem Deckel 17 verschlossen. Im Deckel 17 ist eine Aussparung 18 vorgesehen, in der ein Element 19 zur Lagerung des Läufers 11 einschraubbar ist. Das eine Ende der Welle 13 trägt auf der dem Deckel 17 abgewandten Seite das Antriebsritzel 14.

Das für den Antrieb der Abtragvorrichtung 6 bzw. der beiden Abtragvorrichtungen 6, 60 notwendige Getriebe 5 ist in einem Träger 20 gelagert. Der Träger 20 ist auf der dem Deckel 17 gegenüberliegenden Seite des Vollkörpers 7 angebracht. Auf der Welle 13 des Antriebsritzels 14 ist ein weiteres Ritzel angeordnet, das mit dem Antriebsritzel 14 eine Getriebestufe 21 des Getriebes 5 bildet.

Der Träger 20 selbst ragt so weit über den Vollkörper 7 hinaus, daß beim ersten Ausführungsbeispiel die Abtragvorrichtung 6 in axialer Längserstreckung des Bearbeitungskopfes 2 von beiden Seiten frei zugänglich ist bzw. beim zweiten Ausführungsbeispiel die Abtragvorrichtungen 6, 60 in axialer Längserstreckung des Bearbeitungskopfes 2 von beiden Seiten frei zugänglich sind.

Die Abtragvorrichtungen 6, 60 umfassen jeweils eine Scheibe 22, die um eine Achse 23 in Richtung eines Drehpfeils 24 oder in dessen Gegenrichtung drehbar ist.

Bei den in der Zeichnung dargestellten Ausführungsbeispielen sind die Scheiben 22 einfach konvex geformt, so daß die (in der Zeichnung nicht dargestellte) Schweißeletrode auf den konvexen Seiten der jeweiligen Scheibe aufliegt, während die Abtragvorrichtung 6 bzw. die Abtragvorrichtungen 6, 60 rotieren.

Bei einem weiteren (in der Zeichnung nicht dargestellten) Ausführungsbeispiel ist die Scheibe 22 doppelkonvex ausgebildet, wodurch sowohl von der einen Seite als auch von der der einen Seite gegenüberliegenden Seite zwei Schweißelektroden gleichzeitig bearbeitet werden können.

An der Abtragvorrichtung 6 bzw. 60 ist auf der Scheibe 22 bzw. auf den Scheiben 22 mindestens ein Abtragwerkzeug 28 zum Bearbeiten der Schweißelektrode vorgesehen.

Bei einem anderen Ausführungsbeispiel sind an der Abtragvorrichtung 6 bzw. 60 zwei Abtragwerkzeuge 28, 29 zum Barbeiten der Schweißelektrode vorgesehen. Dabei können die Abtragwerkzeuge 28, 29 diametral einander gegenüber angeordnet sein. Vorzugsweise bestehen die Abtragwerkzeuge 28, 29 aus auswechselbaren Wendeschneidplatten.

Der Bearbeitungskopf 2 bzw. 2' ist mit seiner Unterseite des Deckels 17 an einer Haltevorrichtung in Form eines Ständers 3 angebracht.

Der Ständer umfaßt im wesentlichen zwei ineinander verschiebliche Rohre 30, 31, die gegeneinander federnd über einen Stab 32 gelagert sind. Dabei ist das eine Ende des Stabes 32 mit dem dem Deckel 17 zugewandten Rohr 30 über einen Stift 33 fest verbunden. Das andere Ende des Stabes 32 ist fest mit dem anderen Rohr 31 über eine Tellerplatte 36 verbunden, das in dem mit dem Deckel 17 verbundenen Rohr 30 führbar ist.

Die federnde Lagerung des Ständers 3 ist dabei so aufgebaut, daß eine Feder 34 in dem dem Deckel 17 zugewandten Rohr 30 auf dem Stab 32 und die zweite Feder 35 auf dem Teil des Stabes 32 aufgeschoben ist, der in dem anderen Rohr 31 verläuft. Dabei sind die Federn so ausgelegt, daß im Ruhezustand die in dem anderen Rohr 31 vorhandene Feder 35 zusätzlich die Gewichtskraft des Bearbeitungskopfes 2 bzw. 2' aufnimmt.

Zusätzlich zur funktionellen Befestigung der Vorrichtung 1 sind zwei zueinander wechselseitig angeordnete Drehgelenke 70, 71 am unteren Ende des anderen Rohres 31 vorgesehen, die ermöglichen, den Bearbeitungskopf 2 bzw. 2' zusammen mit der federnden Lagerung in jede beliebige Richtung zu verschwenken. Eine am Ende des Ständers 3 vorgesehene Bodenplatte 72 erlaubt die Befestigung der Vorrichtung 1 sowohl auf einem Boden als auch an einer Wand.

Im Deckel 17 ist eine in die Aussparung 18 führende Bohrung 37 zur Zuführung von Luft für den Antrieb des Pneumatikmotors 4 vorgesehen. Die in den Hohlraum 8 des Pneumatikmotors 4 einströmende Luft treibt die Flügelräder 16 und die mit den Flügelrädern 16 verbunde Welle des Läufers 11 an. Die einströmende Luft entweicht in Strömungsrichtung hinter den Lüfterrädern durch eine Auslaßöffnung 37a, die an der Außenwand des Vollkörpers 7 vorgesehen ist.

Bei einem weiteren Ausführungsbeispiel ist in dieser Auslaßöffnung 37a ein (in der Zeichnung nicht dargestelltes) Ventil vorgesehen, das die ausströmende Luft drosselt. Zusätzlich ist ein Schalldämpfer vorgesehen, der die beim Ausströmen der Luft entstehenden Geräusche mindert.

Bei einem anderen Ausführungsbeispiel wird die Auslaßöffnung 37a dazu verwendet, eine auf die Abtragvorrichtung 6 bzw. 60 einwirkende Ausblasvorrichtung 40 mit entsprechender Druckluft zu versorgen.

Ferner ist eine an sich bekannte Steuerungseinrichtung 50 zur Steuerung des Antriebs 4 der Vorrichtung 1 vorgesehen. Dabei ist der Hohlraum 8 über eine flexible Leitung 69 mit der Steuerungseinrichtung 50 verbunden. Die Zuführung für die für den Betrieb der Vorrichtung 1 notwendige Druckluft ist über einen Anschluß 68 an der Steuerungseinrichtung 50 vorgesehen. Des weiteren bietet die Steuerungseinrichtung 50 die Möglichkeit, bei Empfang eines Signals, beispielsweise von einem Industrieroboter, den Antrieb 4 der Vorrichtung 1 anzusteuern.

## Patentansprüche

1. Vorrichtung zum mechanischen Entfernen von Ablagerungen an Schweißelektroden bestehend aus
- einer Bearbeitungseinheit (A) zum Abtragen der Ablagerungen an der Schweißelektrode mit mindestens einer Abtragvorrichtung (6, 60),
- einer pneumatischen Antriebseinheit (B) für den drehenden Antrieb der Abtragvorrichtung (6, 60) sowie
- einer Getriebeeinheit (C) zur Herstellung einer kinematischen Verbindung zwischen der Antriebseinheit (B) und der Bearbeitungseinheit (A),
dadurch gekennzeichnet, daß
- die Bearbeitungseinheit (A), die Antriebseinheit (B) und die Getriebeeinheit (C) zusammen den Bearbeitungskopf (2, 2') der Vorrichtung (1) bilden,
- die Antriebseinheit (B) als integraler Bestandteil des Bearbeitungskopfes (2, 2') derart ausgebildet ist, daß die Antriebseinheit (B) aus einem Hohlraum (8) mit einem in diesem Hohlraum (8) angeordneten Läufer (11) besteht und der Hohlraum (8) mit einem Luftzufuhr- und einem Luftabfuhranschluß versehen ist und
- der Bearbeitungskopf (2', 2) an einer Montageeinheit (D) federnd gelagert ist.

2. Vorrichtung nach Anspruch 1, dadurch gekennzeichnet, daß eine auf mindestens eine Abtragvorrichtung (6, 60) ausgerichtete Ausblasvorrichtung (40) vorgesehen ist, die mit dem Hohlraum (8) des Bearbeitungskopfes (2, 2') verbindbar ist.

3. Vorrichtung nach einem der Ansprüche 1 oder 2, dadurch gekennzeichnet, daß die Montageeinheit (D) ein Ständer (3) ist.

4. Vorrichtung nach Anspruch 3, dadurch gekennzeichnet, daß der Ständer (3) zwei gegeneinander und ineinander verschieblich gelagerte Rohre (30, 31) aufweist, und daß der Bearbeitungskopf (2) an einem der Enden in axialer Verlängerung der Rohre (30, 31) angeordnet ist.

5. Vorrichtung nach einem der Ansprüche 1 bis 4, dadurch gekennzeichnet, daß eine Steuerungseinrichtung (50) zur Steuerung des Antriebs (4) vorgesehen ist.

6. Vorrichtung nach einem der Ansprüche 1 bis 5, dadurch gekennzeichnet, daß die Steuerungseinrichtung (50) zum Empfangen eines Signals zur Ansteuerung des Antriebs (4) vorgesehen ist.

7. Vorrichtung nach einem der Ansprüche 1 bis 6, dadurch gekennzeichnet, daß in der Abtragvorrichtung (6, 60) mindestens ein Abtragwerkzeug (28) zum Bearbeiten der Schweißelektrode vorgesehen ist.

8. Vorrichtung nach einem der Ansprüche 1 bis 6, dadurch gekennzeichnet, daß in der Abtragvorrichtung (6, 60) zwei Abtragwerkzeuge (28, 29) zum Bearbeiten der Schweißelektrode vorgesehen sind.

9. Vorrichtung nach Anspruch 8, dadurch gekennzeichnet, daß die Abtragwerkzeuge (28, 29) diametral einander gegenüber angeordnet sind.

10. Vorrichtung nach einem der Ansprüche 7 bis 9, dadurch gekennzeichnet, daß die Abtragwerkzeuge (28, 29) Schneidwerkzeuge mit mindestens einer Schneide sind.

## Claims

1. Apparatus for the mechanical removal of deposits on welding electrodes comprising
- a machining unit (A) for abrading the deposits on the welding electrode with at least one abrading device (6,60),
- a pneumatic drive unit (B) for the rotating drive of the abrading device (6, 60) as well as
- a gear unit (c) for establishing a cinematographic connection between the drive unit (B) and the machining unit (A),
**characterized in that**
- the machining unit (A), the drive unit (B) and the gear unit (C) together form the machining head (2, 2') of the apparatus (1),
- the drive unit (B) as integral component of the machining head (2, 2') is constructed in such a way, that the drive unit (B) comprises a cavity (8) and a rotor (11) arranged within said cavity (8) and the cavity (8) is provided with an connecting device for the supply and leading off of air and
- the machining head (2, 2') is mounted resiliently to a mounting unit (D).

2. Apparatus according to claim 1, **characterized in that** there is a blow-out device (40) orientated with at least one abrading device (6, 60) and which can be connected to the cavity (8) of the machining head (2, 2').

3. Apparatus according to one of the claims 1 or 2, **characterized in that** the mounting device (D) is a pedestal (3).

4. Apparatus according to claim 3, **characterized in that** the pedestal (3) has two tubes (30, 31) mounted so as to be displaceable against and within one another and that the machining head (2) is located on one of the ends in the axial extension of the tubes (30, 31)

5. Apparatus according to one of the claims 1 to 4, **characterized in that** a control device (50) is provided for controlling the drive (4).

6. Apparatus according to one of the claims 1 to 5, **characterized in that** the control device (50) is provided for receiving a signal for controlling the drive (4).

7. Apparatus according to one of the claims 1 to 6, **characterized in that** in the abrading device (6, 60) there is at least one abrading tool (28) for machining the welding electrode.

8. Apparatus according to one of the claims 1 to 6, **characterized in that** in the abrading device (6, 60) there are two abrading tools (28, 29) for machining the welding electrode.

9. Apparatus according to claim 8, **characterized in that** the abrading tools (28, 29) diametrically face one another.

10. Apparatus according to one of the claim 7 to 9, **characterized in that** the abrading tools (28, 29) are cutting tools with at least one cutting edge.

## Revendications

1. Dispositif pour enlever mécaniquement des dépôts sur des électrodes de soudage constitué par
- une unité de traitement (A) pour enlever des dépôts sur l'électrode de soudage avec au moins un dispositif d'enlévement (6, 60),
- un dispositif d'entraînement pneumatique (B) pour l'entraînement en rotation du dispositif d'enlévement (6, 60) ainsi que par
- une unité d'engrenages (C) pour réaliser une liaison cinématique entre l'unité d'entraînement (B) et l'unité de traitement (A),
caractérisé en ce que
- l'unité de traitement (A), l'unité d'entraînement (B) et l'unité d'engrenages (C) forment ensemble la tête de traitement (2, 2') du dispositif (1),
- l'unité d'entraînement (B) en tant que composante intégrée de la tête de traitement (2, 2') est configurée de telle manière que l'unité d'entraînement (B) est constituée par un espace creux (8) avec un rotor (11) placé dans cet espace creux (8) et l'espace creux (8) est pourvu d'un raccord d'amenée d'air et d'un raccord d'évacuation d'air et
- la tête de traitement (2', 2) est positionnée élastique sur une unité de montage (D).

2. Dispositif selon la revendication 1, caractérisé en ce qu'il est prévu un dispositif de purge (40) aligné sur au moins un dispositif d'enlèvement (6, 60), dispositif de purge qui peut être relié à l'espace creux (8) de la tête de traitement (2, 2').

3. Dispositif selon l'une des revendications 1 ou 2, caractérisé en ce que l'unité de montage (D) est un montant (3).

4. Dispositif selon la revendication 3, caractérisé en ce que le montant (3) présente deux tubes (30, 31) positionnés déplaçables l'un contre l'autre et l'un dans l'autre et que la tête de traitement (2) est placée à l'une des extrémités dans le prolongement axial des tubes (30, 31).

5. Dispositif selon l'une des revendications 1 à 4, caractérisé en ce qu'un dispositif de commande (50) est prévu pour la commande de l'entraînement (4).

6. Dispositif selon l'une des revendications 1 à 5, caractérisé en ce que le dispositif de commande (50) est prévu pour recevoir un signal pour l'excitation de l'entraînement (4).

7. Dispositif selon l'une des revendications 1 à 6, caractérisé en ce qu'au moins un outil d'enlèvement (28) est prévu dans le dispositif d'enlèvement (6, 60) pour traiter l'électrode de soudage.

8. Dispositif selon l'une des revendications 1 à 6, caractérisé en ce que deux outils d'enlévement (28, 29) sont prévus dans le dispositif d'enlèvement (6, 60) pour traiter l'électrode de soudage.

9. Dispositif selon la revendication 8, caractérisé en ce que les outils d'enlèvement (28, 29) sont placés diamétralement opposés l'un à l'autre.

10. Dispositif selon l'une des revendications 7 à 9, caractérisé en ce que les outils d'enlévement (28, 29) sont des outils de coupe avec au moins un tranchant.
